# FASCICULE DE BREVET EUROPEEN

(11) **EP 3 180 772 B1**
(45) Date de publication et mention de la délivrance du brevet: **08.07.2020**
(21) Numéro de dépôt: 15775785.7
(22) Date de dépôt: 20.07.2015
(51) Int. Cl.: G06T 11/00

(54) **SYSTÈME ET PROCÉDÉ DE PARAMÉTRAGE COLORIMÉTRIQUE ET GEOMÉTRIQUE DE TEXTURES PROCÉDURALES SUR UN OBJET**
SYSTEM UND VERFAHREN ZUR KOLORIMETRISCHEN UND GEOMETRISCHEN PARAMETRISIERUNG PROZEDURALER TEXTUREN AUF EINEM OBJEKT
SYSTEM AND METHOD FOR COLORIMETRICALLY AND GEOMETRICALLY PARAMETRIZING PROCEDURAL TEXTURES ON AN OBJECT

(30) Priorité: 14.08.2014 FR 1401849
(43) Date de publication de la demande: 21.06.2017
(73) Titulaire: ADOBE INC., San Jose, CA 95110-2704 (US)
(72) Inventeur: DEGUY, Sébastien, 63000 Clermont-Ferrand (FR)
(74) Mandataire: Müller-Boré & Partner Patentanwälte PartG mbB
(86) Numéro de dépôt international: PCT/IB2015/001210
(87) Numéro de publication internationale: WO 2016/024153

(56) Documents cités:
- US-A- 5 432 896
- DORSEY J ET AL: "FLOW AND CHANGES IN APPEARANCE", COMPUTER GRAPHICS PROCEEDINGS 1996 (SIGGRAPH). NEW ORLEANS, AUG. 4 - 9, 1996; [COMPUTER GRAPHICS PROCEEDINGS (SIGGRAPH)], NEW YORK, NY : ACM, US, 4 août 1996 (1996-08-04), pages 411-420, XP000682757,

## Description

### DOMAINE TECHNIQUE DE L'INVENTION

La présente invention concerne un système et un procédé de génération de textures sur un objet à partir de données autres que les données colorimétriques.

### ETAT DE LA TECHNIQUE

Dans le domaine du graphisme assisté par ordinateur, on utilise depuis de nombreuses années une pléiade d'outils permettant d'appliquer des couleurs sur des objets. De façon classique, une couleur est appliquée sous la forme d'une couche, à la façon d'une couche de peinture appliquée sur un support physique réel.

L'application d'une couche de couleur produit classiquement un résultat uniforme. Pour effectuer des variations de couleurs, d'intensité ou d'opacité, un utilisateur doit procéder manuellement afin de régler les paramètres de couleur à chaque point, créant ainsi une cartographie colorimétrique précise et détaillée. Différents outils graphiques tels que des pinceaux ou applicateurs virtuels sont proposés à l'utilisateur qui effectue un tel « mapping ».

Pour modifier un « mapping » préalablement établi, l'utilisateur utilise les mêmes types d'outils pour appliquer point par point les paramètres modifiés, et ainsi produire un résultat colorimétrique modifié. Même si l'utilisateur peut utiliser un cadre pour sélectionner plusieurs points à modifier de façon similaire, le processus doit être effectué de façon manuelle, pour chaque image, et requiert donc un temps considérable.

On connaît également différents filtres qui peuvent être appliqués sur une ou plusieurs couleurs d'une image. Classiquement, de tels filtres agissent de façon à modifier les couleurs en fonction de paramètres intrinsèques aux couleurs elles-mêmes. Ces filtres permettent donc de créer des effets soit à partir de choix d'ambiance ou de style imposés par un utilisateur, soit en fonction des paramètres initiaux des couleurs à traiter.

Le processus de création ou modification de couleurs d'objets ne permet donc pas de prendre en compte les paramètres ou caractéristiques des objets sur lesquels la couleur est appliquée, ni de l'environnement dans lequel les objets sont mis en en scène. Ainsi, pour créer des effets réalistes, un utilisateur doit procéder manuellement pour déterminer la ou les points ou zones cibles, les paramètres à modifier, et le niveau de modification des paramètres choisis. Si un ou plusieurs objets d'une ou plusieurs scènes doivent être traités, les opérations requises peuvent impliquer un temps de mise en œuvre considérable.

Par exemple, pour colorer une zone d'un matériau en bois afin de lui conférer un aspect boisé réaliste, un utilisateur doit effectuer les ajustements paramétriques de façon minutieuse et précise. Les outils de coloration ne prenant pas en compte les propriétés des matériaux, ou les interactions entre les objets et l'environnement, un utilisateur qui souhaite créer un effet visuel basé sur une réaction ou comportement d'un matériau doit tout d'abord concevoir ou imaginer l'effet souhaité de façon réaliste, puis effectuer les modifications colorimétriques en fonction des paramètres des couleurs présentes. Ainsi, si une couleur est appliquée sur un objet, son impact de coloration sera identique sur toutes les zones de cet objet. Par exemple, si l'objet comporte une portion métallique, une autre portion en bois et une zone en plastique, la couleur appliquée produit le même effet sur toutes ces zones, alors que sur un objet réel, les effets produits sur chacun des matériaux seraient nuancés, voire très différents selon les cas.

Le document FR2681967 divulgue un procédé pour modifier les couleurs d'une image affichée sur un dispositif d'affichage basé sur la détermination de valeurs colorimétriques. Le procédé comporte la sélection d'au moins une couleur représentative d'au moins un pixel de l'image constituée d'une pluralité de pixels, la détermination des valeurs colorimétriques de ladite au moins une couleur, la sélection d'une seconde couleur et la détermination des valeurs colorimétriques de la seconde couleur, et la modification des valeurs colorimétriques d'une pluralité de pixels de l'image de sorte que pour tout pixel donné de cette pluralité ayant des valeurs colorimétriques qui correspondent aux valeurs colorimétriques de ladite au moins une couleur, les valeurs colorimétriques du pixel donné sont modifiées pour correspondre aux valeurs colorimétriques de la seconde couleur. La couleur appliquée est identique quelque que soit la nature de l'objet (plastique, bois, etc.) et ne tient pas compte des textures, mais uniquement des variations de couleur d'une zone sélectionnée par l'utilisateur.

Le document EP0884694 divulgue un procédé permettant l'ajustement de couleurs dans des images numériques, notamment la correction des « yeux rouges » sur les photos. Les données de couleurs des pixels sont ajustées en identifiant les pixels d'une image numérique comportant des données de couleur d'origine correspondant à la couleur prédéterminée. Or la couleur appliquée est automatique se base uniquement sur des données colorimétriques, en particulier les couleurs de l'iris.

Le document WO2008066880 divulgue un procédé permettant l'obtention d'un ensemble original de deux ou plusieurs couleurs originales associées à une oeuvre. Pour ce faire, un ensemble d'entrée d'une ou plusieurs couleurs choisies par l'utilisateur est reçue. Pour chaque couleur d'origine, une cartographie de la couleur d'origine vers les couleurs dérivées est effectuée. La pluralité de couleurs dérivées est obtenue sur la base d'une ou plusieurs couleurs choisies par l'utilisateur.

Le document WO2012154258 divulgue un outil de coloration colorimétrique en 3 dimensions. Chaque pixel de l'image comprend un ensemble de valeurs de pixels dans un espace de couleurs tridimensionnel. Même si elle permet d'utiliser une palette de couleurs variée, la couleur appliquée ne varie pas en fonction du matériau sur lequel elle est appliquée.

Le documentUS 5 432 896 A décrit un procède mis en oeuvre par ordinateur permettant d'effectuer des modifications sur une image à l'aide d'une palette d'outils permettant d'appliquer des couleurs. Le procède vise en fait à simuler l'effet de l'application de peinture sur une image comme cela pourrait se faire à la main, à l'aide d'outils réels sur une feuille.

Le document « flow and changes in appearance », Dorsey J et Al, computer graphics proceedings 1996 (siggraph), Aug.4-9, 1996 ; New York, NY : ACM, pages 411-420, divulgue un modèle phénoménologique basé sur des systèmes de particules et des équations permettant de modéliser l'absorption d'eau par la surface et la sédimentation de dépôts. Le document présente un modèle avec des exemples d'écoulements sur des géométries complexes. Ce document s'attarde en particulier à expliquer et paramétrer les phénomènes relatifs à l'absorption de l'eau sur des surfaces et la sédimentation des dépôts.

Egalement, la demande US2010045669 décrit un système et procédé de simulation et de visualisation d'un écoulement de fluide en interaction avec un objet. Un exemple de réalisation de l'invention concernée dans ce document prévoit une simulation de la tombée d'un liquide selon un plan en deux dimensions ainsi que la génération d'un premier et second buffer de profondeur pour des surfaces de dessus et de dessous de l'objet. Les valeurs des premières et secondes textures simulées correspondent aux surfaces supérieures et inférieures de l'objet. Un maillage du fluide est rendu selon un plan en deux dimensions basé sur les textures de simulation.

La demande US20100156920 concerne un appareil de synthèse de texture avec cohérence en fonction du temps comprenant un préprocesseur de texture destiné à recevoir comme information d'entrée, une image de texture en deux dimensions et un maillage triangulaire en trois dimensions. Le prétraitement de l'image en deux dimensions est effectué sous une forme appropriée à une recherche rapide. Un générateur de champ vectoriel permet de définir un champ de vecteurs sur une surface en trois dimensions de la maille triangulaire en trois dimensions. Un module de recherche de couleur permet de trouver les couleurs respectives des côtés de triangle sur la base d'une phase précédente. Un synthétiseur de texture permet de déterminer les coordonnées de textures pour le triangle. Le préprocesseur de textures reçoit de plus des informations concernant la taille de la texture à synthétiser ainsi qu'une orientation initiale du champ de vecteur.

Selon un autre aspect, le processus classique de création ou modification de couleurs d'objets ne permet pas d'effectuer des modifications de forme de l'objet dans une application donnée en réaction aux paramètres physiques, chimiques, ou mécaniques de l'application en soit et des encres appliquées. Enfin, les processus classiques utilisant les géométries à base de reliefs ne conservent pas les données des étapes antérieures une fois que les caractéristiques de reliefs ont été modifiées. Ainsi, pour retrouver une géométrie antérieure, il est nécessaire de reconstruire manuellement les éléments architecturaux correspondants, ce qui requiert souvent un temps de mise en œuvre important. En cas de géométrie complexe, il peut parfois être difficile de retrouver certains paramètres antérieurs.

Il existe donc un besoin pour pallier ces différents inconvénients.

Un objet de l'invention consiste à prévoir un système et procédé permettant d'améliorer l'efficacité et la productivité des outils de création.

Un autre objet consiste à prévoir un système et un procédé graphique permettant d'accroître la souplesse et les possibilités graphiques lors de création de couleurs ou rendus.

Un autre objet de l'invention consiste à prévoir un système et un procédé graphique permettant d'accroître le réalisme des éléments représentés.

Encore un autre objet de l'invention consiste à prévoir un système et un procédé permettant d'améliorer l'interactivité entre le rendu d'un objet représenté et son environnement.

Encore un autre objet de l'invention consiste à prévoir un système et un procédé permettant de créer un mode d'édition contextuelle prenant en compte les paramètres environnementaux.

Encore un autre objet de l'invention consiste à prévoir un système et procédé permettant d'effectuer des modifications de forme de l'objet cible en fonction de paramètres physiques, chimiques ou mécaniques intrinsèques.

Encore un autre objet de l'invention consiste à prévoir un système et procédé permettant d'effectuer des retours de arrière au niveau des phases de modifications géométriques de l'objet cible.

### EXPOSE DE L'INVENTION

Pour ce faire, l'invention prévoit différents moyens techniques. Par exemple, l'invention prévoit tout d'abord un système de génération de textures procédurales sur un objet à partir de données d'encres physiques et de données d'applicateursphysiques, comprenant :
- un accès à des données d'encres physiques comprenant une pluralité de paramètres parmi les suivants : la couleur, la viscosité , la température, la vitesse de séchage, la composition chimique, le taux de transparence;
- un accès à des données d'applicateurs physiques comprenant une pluralité de paramètres parmi les suivants : la largeur, la profondeur, l'épaisseur, le profil, la rugosité, la porosité, la souplesse de l'applicateur, la force d'application, la pression, la température d'application, ;
- un accès à des données d'objets cibles comportant des données de maillage initial des objets cibles et des données de relief initial des objets cibles ;
- un accès à des données de règles et fonctions de mélange ;
- un accès à des données physiques de textures T initiales ;
- un microprocesseur et des instructions de commande;
- un module de génération de rendu virtuel avant projection, prévu pour combiner les données d'encres physiques avec les données d'applicateurs physiques ;
- un module de transformation de rendu virtuel avant projection (RVAP), prévu pour adapter les données de ce rendu à un mode de projection de rendu donné ;
- un module de tessellation des données des objets cibles pour transformer en maillage des données de relief des objets cibles ;
- un module intégrateur des paramètres physiques, prévu pour générer un nouvel ensemble de textures T+1 pour le ou lesdits objets prenant en compte les données des objets, les données de l'ensemble de textures T, les données du module de tessellation et les données de rendu virtuel avant projection transformé.

Grâce à l'architecture de ce système, les textures résultantes comportent tous les détails géométriques et colorimétriques permettant d'effectuer un rendu réaliste et fidèle des paramètres appliqués, en utilisant un espace mémoire fortement réduit du fait de l'utilisation de paramètres procéduraux.

De manière avantageuse, le système comprend un module de rendu de textures à partir des paramètres procéduraux préalablement obtenus.

Egalement de manière avantageuse, le système comporte un module de sauvegarde temporelle prévu pour conserver les données nécessaires pour générer à nouveau un ensemble de textures d'un objet pour lequel un ou plusieurs paramètres sont modifiés ou pour revenir à une étape antérieure d'un processus, à l'état dans lequel l'architecture paramétrique se trouvait à cette étape antérieure.

Puisque les données procédurales modifiées comportent des paramètres relatifs à la géométrie de l'objet transformé en fonction du temps, il est possible d'effectuer des retours en arrière temporels afin de retrouver un état préalable. Un tel mode temporel permet de réaliser facilement et rapidement des essais ou comparaisons entre différentes architectures paramétriques, sans devoir changer tous les paramètres d'un processus, ou de revenir à une étape antérieure, sans devoir paramétrer à nouveau toutes les données.

Egalement de manière avantageuse, les données de règles et fonctions de mélange comportent des paramètres relatifs aux déformations des objets.

Les paramètres relatifs aux déformations des objets sont avantageusement effectifs sur les données de maillage et/ou de relief.

Selon une variante de réalisation, le système comprend un module intégrateur, prévu pour utiliser des règles et/ou fonctions de combinaison permettant de définir et/ou ajuster les modes d'intégration des différents paramètres physiques entre eux.

En variante, le module intégrateur comporte un sous-module de sélection de règles et un sous-module de mise en œuvre de règles permettant d'une part, de sélectionner au moins une règle et/ou fonction applicable et d'autre part, de déterminer le mode d'application de la règle afin de générer les données de textures T+1 résultantes.

Le système dispose ainsi d'une grande souplesse, permettant par exemple de prévoir des règles selon lesquelles un paramètre donné, comme par exemple la corrosion, produit un effet sur un matériau métallique, et aucun effet sur un matériau PVC.

De manière avantageuse, le système comprend un accès à d'éventuelles données de taux d'application et/ou d'environnement.

L'invention prévoit également un procédé de génération de textures procédurales sur un objet à partir de données physiques d'encres et de données d'applicateurs physiques, comprenant les étapes dans lesquelles :une ou plusieurs sources de données fournissent un accès à :
- des données d'applicateurs physiques comprenant une pluralité de paramètres parmi les suivants : la largeur, la profondeur, l'épaisseur, le profil, la rugosité, la porosité, la souplesse de l'applicateur, la force d'application, la pression, la température d'application, ;
- des données d'objets cibles comprenant des données de maillage initial des objets cibles et des données de relief initial des objets cibles ;
- des données de règles et fonctions de mélange ;
- des données physiques de textures T initiales ;
- un module de génération de rendu virtuel avant projection combine les données d'encres physiques avec les données d'applicateurs physiques;
- un module de transformation de rendu virtuel avant projection reçoit les données de rendu virtuel avant projection préalablement obtenues, et effectue une adaptation de ces données pour un mode de projection de rendu donné ;
- un module de tessellation effectue une transformation d'au moins une partie des données de relief (initial) en données de maillages (finales) ;
- un module intégrateur des paramètres physiques reçoit les données de l'objet, les données de l'ensemble de textures T, les données de rendu virtuel avant projection transformé, les données de relief et de maillage de l'objet, et les éventuelles données de taux d'application et d'environnement correspondants, et génère un nouvel ensemble de textures T+1 pour le ou lesdits objets, prenant en compte ces données.

Dans un mode de réalisation avantageux, le module intégrateur reçoit des règles et/ou fonctions d'intégration pour définir et/ou ajuster les modes d'action des différents paramètres physiques entre eux.

Selon encore un autre mode de réalisation, un sous-module de sélection de règles sélectionne au moins une règle et/ou fonction applicable et un sous-module de mise en œuvre de règles pour déterminer le mode d'application de la règle afin de générer les données de textures T+1 résultantes.

Egalement de manière avantageuse, un module de sauvegarde temporelle conserve les données nécessaires pour générer à nouveau un ensemble de textures (T+1) d'un objet pour lequel un ou plusieurs paramètres sont modifiés ou pour revenir à une étape antérieure d'un processus à l'état dans lequel l'architecture paramétrique se trouvait à cette étape antérieure.

### DESCRIPTION DES FIGURES

D'autres caractéristiques et avantages de l'invention ressortiront de la description suivante, donnée à titre d'exemple, sans caractère limitatif, en regard des dessins annexés sur lesquels :
- la figure 1 représente schématiquement un exemple de système de génération de textures conforme à l'invention ;
- la figure 2 est un organigramme fonctionnel présentant les principales étapes du procédé de génération de texture selon l'invention.

Dans la description qui va suivre, des éléments sensiblement identiques ou similaires seront désignés par des références identiques.

### DESCRIPTION DETAILLEE DE L'INVENTION

### DEFINITIONS

Par « encre » ou « peinture » physique, on entend un élément solide, liquide, gazeux ou un mélange de ces phases, qui, lorsqu'il est appliqué sur un objet, engendre une modification physique au moins de la surface de cette objet, en particulier des textures de cet objet, de sorte qu'au moins un de ses paramètres ou caractéristiques physiques, en particulier une caractéristique visible, soit modifié.

Par « paramètre physique », on entend tout élément, propriété ou caractéristique physique et/ou chimique, susceptible d'être mesuré ou détecté ou observé ou quantifié, caractérisant un objet, une encre, un environnement, un applicateur, etc.

Par « architecture paramétrique », on entend l'ensemble de paramètres permettant de définir les caractéristiques physiques, chimiques (constituants, propriétés, aspect visuel d'un objet, texture, encre, etc.) et comportementales d'un élément (encre, texture, objet, etc.).

Par « applicateur physique », on entend un élément, en particulier un élément virtuel visible ou non sur une scène, permettant d'appliquer une encre ou peinture physique sur un objet, tel qu'un pinceau, rouleau, crayon, pistolet applicateur, gicleur ou vaporisateur, plaque, outil, etc.

Par « taux d'application », on entend l'opacité globale du coup de pinceau/applicateur qu'un utilisateur applique, réglable par l'utilisateur et décorrélée des autres paramètres telle que l'encre. Par exemple, lorsqu'un utilisateur commence le processus de peinture sur un objet pas ou peu recouvert, le « taux d'application » peut être réglé à une valeur importante, pour que chaque coup de pinceau/applicateur impacte fortement la texture de l'objet. Lorsque l'utilisateur arrive à une phase d'affinement et de petites retouches, il peut régler ce taux à une valeur plus faible pour ne pas complètement modifier les endroits déjà peints, mais au contraire ajuster délicatement certains détails.

Selon les cas et les modes de réalisation, le taux d'application peut être exprimé de plusieurs façons. Par exemple, on peut exprimer le taux d'application τ avec une valeur comprise entre 0 et 1. Si on a deux entrées A (la texture existante) et B (la texture à appliquer), la sortie O est égale à « A*(1-T) + B*T ». Si τ=0, on n'applique rien et la nouvelle texture est égale à la texture existante. Si τ=1, la nouvelle texture est égale à la texture à appliquer (aux points concernés par le coup de pinceau), et l'ancienne texture est pleinement recouverte aux endroits concernés.

Par « règle » ou « fonction » de mélange, on entend une description du processus qui détermine comment réagissent un matériau (et éventuellement une ou plusieurs « encres » déjà appliquées sur le matériau à un endroit donné) et une encre appliquée sur ce matériaux. A titre illustratif, voici quelques exemples de règles :
- un liquide appliqué sur bois nu est absorbé par le bois. En variante, il a pour effet d'assombrir la teinte du bois ;
- un liquide appliqué sur un vernis ou un plastique n'est pas absorbé du tout et confère un effet de « goutte » sur la surface du matériau ;
- de la chaleur appliquée sur un matériau peint a pour effet de faire écailler la peinture puis de la brûler, en fonction de la température réglée par l'utilisateur, et éventuellement de calciner le matériau sur lequel la peinture est appliquée si celui-ci est combustible ;
- l'application d'un acide ou d'un jet de sable sur un plastique brillant va progressivement le dépolir, le rendre moins brillant et de plus en plus rugueux. Grâce au procédé et au système décrit dans ce qui suit, les différentes étapes d'un processus évolutif peuvent être déterminées et présentées.

Par « texture procédurale », on entend une texture définie à l'aide d'algorithmes et/ou mathématiquement et affichée au moyen d'un moteur de rendu permettant de transformer les données mathématiques en format image classique tel que bitmap par exemple.

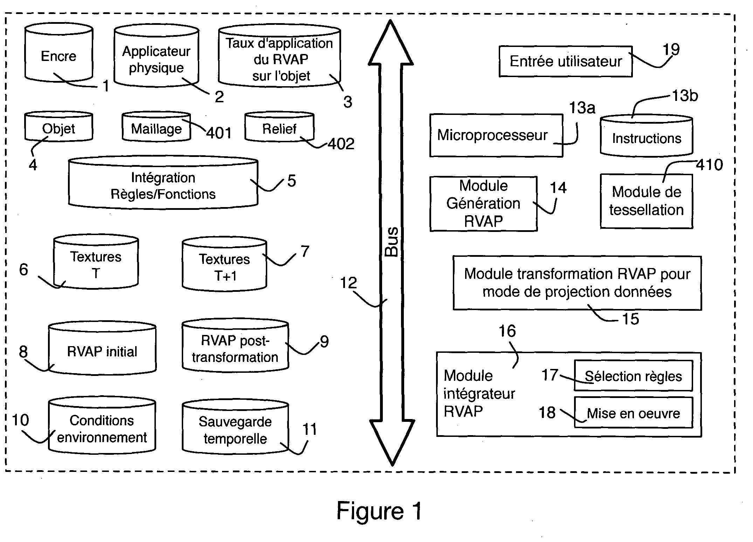

La figure 1 illustre un exemple de système de génération de textures procédurales selon l'invention. Il comporte au moins un microprocesseur 13a, adapté pour la mise en œuvre d'instructions contenues dans une mémoire d'instructions 13b. Une pluralité de modules est avantageusement fournie par la mise en œuvre des instructions par le microprocesseur.

Un élément de données d'encre 1 stocke les données des paramètres physiques de la ou des encres disponibles. Ces données comprennent par exemple la couleur, la viscosité, la température, la vitesse de séchage, la composition chimique, le taux de transparence, etc.

Un élément de données d'applicateurs physiques 2 stocke les données des caractéristiques d'applicateurs physiques. Ces données peuvent comprendre une pluralité de paramètres tels que la largeur, la profondeur ou l'épaisseur, le profil, la rugosité, la porosité, la souplesse de l'applicateur, la force d'application, la pression, la température d'application, etc. De manière générale, tout paramètre susceptible d'influencer les caractéristiques d'application d'une encre sur un objet de destination. Des indices peuvent être affectés à chacun des paramètres afin de pondérer leurs niveaux d'importance relative.

Un élément de données de taux d'application 3 stocke les données des paramètres physiques en relation avec le taux d'application du rendu hors objet.

Un élément de données d'objets cibles 4 comportant des données 401 de maillage initial des objets cibles et des données 402 de relief initial des objets cibles, stocke les données des objets cibles susceptibles d'être modifiés par les paramètres physiques appliqués. Ces données comprennent par exemple les caractéristiques physiques des objets cibles telles que les formes, les dimensions, le poids, le coefficient d'absorption, la porosité, la composition chimique et les diverses caractéristiques en relation avec la surface et les textures des objets.

Un élément 6 de données de textures T d'objets stocke les données des textures initiales des objets cibles sur lesquelles une ou plusieurs encres sont susceptibles d'être appliquées. Les éventuelles données de textures T+1 nouvellement obtenues sont contenues dans un élément mémoire 7. Ces données comprennent par exemple les caractéristiques physiques telles que la composition de l'encre, la couleur, l'épaisseur, la luminosité, le relief, les caractéristiques de réflexion de la lumière, etc.

Un élément de données d'intégration 5 stocke les données des règles et/ou fonctions à appliquer par l'intégrateur 16 pour générer le nouvel ensemble de textures T+1. Ces règles et/ou fonctions permettent de prendre en compte un ou plusieurs processus susceptibles d'influencer le résultat obtenu, comme par exemple le mélange des couleurs (par exemple, une règle peut permettre de calculer les moyennes des couleurs appliquées), les interactions chimiques entre les constituants, la diffusion par capillarité, la combustion ou tout processus thermodynamique, un effet de goutte, une modification ou altération de la surface de l'objet (par exemple : corrosion ou oxydation, moisissure, écaillement, etc.).

Par ailleurs, afin de bien gérer les caractéristiques géométriques, les données 5 de règles et fonctions de mélange comportent des paramètres relatifs aux déformations des objets. Ces paramètres relatifs aux déformations des objets sont avantageusement effectifs sur les données de maillage et/ou de relief des objets cibles.

Un élément 8 de données de Rendu Virtuel Avant Projection (RVAP) stocke les données du rendu obtenu après la combinaison des données d'encres et des données d'applicateurs physiques. Les éventuelles données de rendu post-transformation obtenues après la prise en compte du mode de projection prévu sont contenues dans un élément mémoire 9. Ces données comprennent par exemple les caractéristiques physiques telles que la composition de l'encre, la couleur, l'épaisseur, la luminosité, le relief, les caractéristiques de réflexion de la lumière, etc.

Un élément optionnel de paramètres en relation avec les conditions d'environnement 10 comprend les paramètres susceptibles d'affecter plusieurs éléments de la scène, comme par exemple des données de température, de pression, humidité, force physique (magnétique, gravitationnelle ou autre), etc.

Un module facultatif de sauvegarde temporelle 11 permet de conserver des données reliées à une échelle temporelle, en particulier les entrées utilisateur telles que les données de parcours, de pression, de direction, d'opacité, etc. Ce module permet par exemple d'exécuter à nouveau une simulation d'animation après changement de un ou plusieurs paramètres, en effectuant uniquement les opérations requises par les données modifiées. Il est ainsi possible de réaliser simplement et rapidement plusieurs simulations successives basées sur une simulation précédente, ou de retrouver une simulation préalablement effectuée.

Les éléments mémoires précédemment décrits et/ou les différents modules peuvent être regroupés en un ou plusieurs éléments et un ou plusieurs modules sans affecter le fonctionnement du système de façon significative.

Une entrée utilisateur 19 permet de recevoir des données en provenance d'une source externe, et notamment d'un utilisateur qui fournit un parcours d'application des paramètres physiques. Cette entrée peut permettre de recevoir plusieurs types de paramètres tels que des données de pression, de direction, d'opacité, etc., permettant de bien définir, quantifier et délimiter les éléments paramétriques appliqués.

Un module 14 de génération de rendu virtuel avant projection (RVAP) est prévu pour générer un rendu avant projection sur l'objet cible comportant des données physiques de rendu virtuel avant projection (RVAP) compatibles pour une projection contre un objet cible de façon indépendante du mode de projection. Le rendu virtuel avant projection (RVAP) est obtenu à partir des données physiques d'encre et d'applicateurs physiques.

Un module 15 de transformation de rendu virtuel avant projection (RVAP), est prévu pour adapter les données du RVAP à un mode de projection de rendu donné (vectorielle/unidirectionnelle ou normale/tangentielle).

Un module 410 de tessellation effectue une transformation d'au moins une partie des données de relief (initial) en données de maillage (finales).

Un module 16 intégrateur des paramètres physiques, prévu pour générer un nouvel ensemble de textures T+1 pour ledit objet prenant en compte les données de l'objet, les données de l'ensemble de textures T, les données de RVAP transformé, les données de relief et de maillage de l'objet et les éventuelles données de taux d'application et d'environnement correspondants.

Le module intégrateur 16 comporte un sous-module 17 de sélection de règles et un sous-module 18 de mise en œuvre de règles permettant d'une part, de sélectionner au moins une règle et/ou fonction applicable et d'autre part, de déterminer le mode d'application de la règle afin de générer les données de textures T+1 résultantes.

Un bus 12 permet les transferts de données entres les divers modules et les éléments mémoires décrits ci-après.

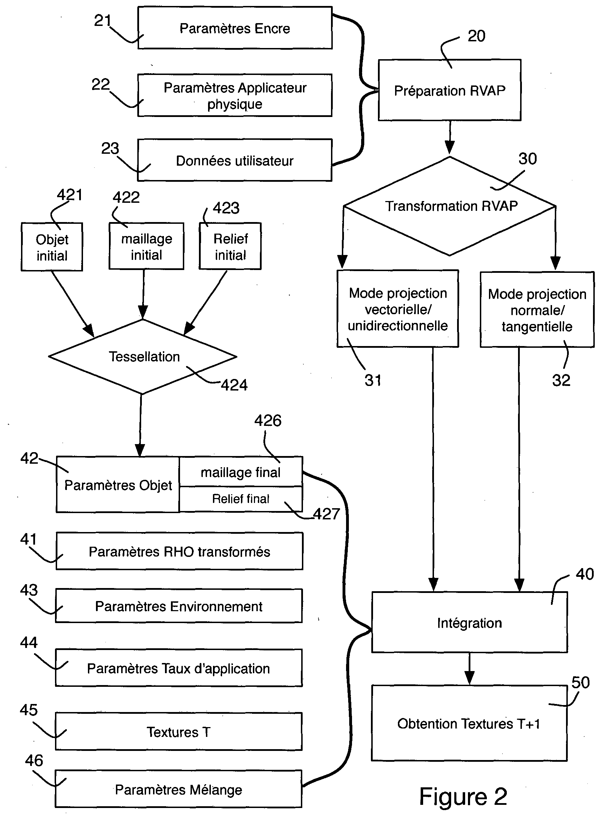

La figure 2 montre un organigramme fonctionnel des principales étapes du procédé de génération de textures procédurales selon l'invention. A l'étape 20, le système est initialisé et le module 14 de génération de rendu virtuel avant projection (RVAP) reçoit les données 21 et 22 en relation avec les paramètres encre et les paramètres d'applicateur physique et les données utilisateur 23, en relation avec le parcours d'application des paramètres physiques. Le rendu hors objet est généré par le module 14 de génération de rendu hors objet.

A l'étape 30, le module 15 de transformation du rendu virtuel avant projection (RVAP) effectue une transformation du rendu dans le format requis par le mode de projection applicable. En fonction de ce mode, s'il s'agit d'un mode de projection vectorielle ou unidirectionnelle, l'étape 31 est concernée. Dans le cas d'un mode de projection normale ou tangentielle, l'étape 32 est effectuée.

Une étape de tessellation 424, permet de transformer au moins une partie des données de relief en données de maillage.

Indépendamment du type de projection, l'étape suivante 40 prévoit une intégration du rendu virtuel avant projection (RVAP) par le module intégrateur. Cette étape implique une sélection des règles et/ou fonctions applicables et une mise en œuvre de l'intégration en se basant sur les règles et/ou fonctions applicables. Cette étape prévoit l'intégration des paramètres physiques tels que les paramètres de l'objet, incluant les données de maillage final et de relief final, le taux d'application, les paramètres de texture T et les paramètres d'environnement afin de générer et/ou adapter un nouvel ensemble de textures T+1 pour le ou les objets affectés par les événements se produisant dans la scène. Enfin, à l'étape 50, les données de texture T+1 sont obtenues.

### VARIANTES ET AUTRES MODES DE REALISATION

Dans ce qui précède, le système et procédé selon l'invention est présenté dans un environnement de travail adapté pour un outil d'édition destiné à un utilisateur appelé à créer ou modifier le rendu d'un ou plusieurs objets.

En variante, le système et le procédé selon l'invention sont utilisés en mode autonome, pour la génération de rendus d'objets à partir de paramètres physiques préétablis ou pouvant être calculés par le système lui-même, par exemple en fonction de résultats intermédiaires. De tels exemples de réalisation sont avantageusement utilisés pour des jeux vidéo ou films, en particulier des jeux ou films dans lesquels les rendus ou textures sont générés par un moteur de génération de textures procédurales. Le document WO2012014057, incorporé par référence dans le présent document, décrit un exemple d'un tel système et procédé de rendu.

Le système et procédé selon l'invention permettent de générer et/ou modifier des rendus d'objets en prenant en compte les facteurs techniques (physiques, chimiques, thermodynamiques, etc.) inhérents aux objets eux-mêmes ainsi qu'à l'environnement de la scène.

Par exemple, pour créer un effet de corrosion sur un objet, un utilisateur peut utiliser une encre ou peinture et des objets avec des paramètres en relations avec la corrosion. Parmi ces paramètres physiques (autres que les données de couleur) les comportements des objets en relation avec les encres ou peintures appliquées, c'est-à-dire les interactions entre les différents éléments physiques peuvent par exemple définir que des matériaux tels que le plastique ne réagissent pas à des effets de corrosion, l'acier développe des zones corrodées, le cuivre s'oxyde, etc.

Selon les modes de réalisations, certains paramètres peuvent être affectés soit aux encres ou peintures physiques, soit aux objets, soit à l'environnement, ou encore aux règles ou fonctions de mélange. La répartition ou l'architecture paramétrique peut aussi varier pour produire de rendus comparables.

Dans un autre exemple d'utilisation du procédé et du système selon l'invention, la peinture ou encre physique à appliquer aux objets comporte uniquement des paramètres non colorimétriques, comme par exemple des données d'énergie thermique ou chaleur, des données de pression, etc. Dans un exemple où l'applicateur physique applique de la chaleur, ce dernier peut représenter un fer à souder permettant de réaliser des opérations de pyrogravure sur une plaque de bois. Si une bordure métallique délimite la zone à graver en bois, les paramètres et règles permettent de gérer les phénomènes physiques de sorte que l'application du fer à souder sur le métal ne produit pas d'effet « brûlé ». Les données de parcours d'application permettent de définir le dessin ou motif produit par l'opération de gravure. Selon le cas, les données de parcours peuvent provenir d'un utilisateur qui simule le déplacement du fer, ou d'une carte d'application fournie en entrée.

Dans un autre exemple, un dissolvant à peinture est appliqué sur un dessus de table à l'aide de gicleur. Les textures initiales de bois peint sont substituées par des textures montrant le même bois, mais à l'état naturel, sans peinture. Selon le parcours d'application, une ou plusieurs zones conservant des restes de peinture peuvent encore être présentes sur l'objet.

Le tableau 1, ci-après, illustre des exemples de paramètres et règles permettant de mettre en œuvre les exemples évoqués.

**TABLEAU 1 : exemple de paramètres physiques**

| Encre/ peinture | applicateur | objet | Règle /fonction de mélange | Texture initiale | Texture finale |
|---|---|---|---|---|---|
| Liquide corrosif | Pinceau ou rouleau | Corps métallique | Mode et intensité de corrosion sur métal | Métal état neuf | Métal aspect rouille |
| Chaleur | Fer à souder | Plaque de bois | Effet et intensité de la chaleur | Bois clair | Bois brûlé |
| Liquide dissolvant | Spray (gicleur) | Dessus de table | Effet et intensité de l'attaque chimique | Bois peint | Bois naturel |

La sauvegarde temporelle permet avantageusement de revenir en arrière sur un processus afin de retrouver un des multiples états précédents. Elle peut également permettre de refaire un processus en modifiant seulement un ou quelques paramètres, tout en bénéficiant des autres paramètres non modifiés, évitant ainsi de devoir paramétrer à nouveau toutes les données. Ceci permet par exemple de comparer facilement et rapidement les résultats que l'on peut obtenir en modifiant uniquement certains paramètres. Par exemple, il est possible de changer une caractéristique d'une encre (par exemple la couleur) pour un coup de pinceau ou plusieurs préalablement appliqué en cours de processus. Dans un autre exemple, la viscosité d'une encre est modifiée afin de réduire l'impact de cette encre sur une couche préalable.

Les Figures et leurs descriptions faites ci-dessus illustrent l'invention plutôt qu'elles ne la limitent. Les signes de références dans les revendications n'ont aucun caractère limitatif. Les verbes « comprendre » et « comporter » n'excluent pas la présence d'autres éléments que ceux listés dans les revendications. Le mot « un » précédant un élément n'exclut pas la présence d'une pluralité de tels éléments. En outre, le système et procédé préalablement décrits fonctionnent avantageusement en multi-canal, c'est-à-dire en traitant plusieurs textures (diffuse, normale, etc.) à chaque étape. Ainsi, les termes « texture T (ou T+1) » et «textures T (ou T+1) » concernent une ou plusieurs textures selon les cas ou modes de réalisation.

### Numéros de référence employés sur les figures

- 1: Données d'encres physiques
- 2: Données d'applicateurs physiques
- 4: Données d'objets cibles
- 5: Données de règles et fonctions de mélange
- 6: Données physiques de texture T initiales
- 11: Module de sauvegarde temporelle
- 13a: Microprocesseur
- 13b: Instructions de commande
- 14: Module de génération de rendu virtuel avant projection
- 15: Module de transformation de rendu virtuel avant projection
- 16: Module intégrateur des paramètres physiques
- 17: Sous-module de sélection de règles
- 18: Sous-module de mise en œuvre de règles
- 42: Données physiques d'encre
- 43: Données d'applicateurs physiques
- 401: Données de maillage initial des objets cibles
- 402: Données de relief initial des objets cibles
- 410: Module de tessellation

## Revendications

1. Système de génération de textures procédurales sur un objet à partir de données d'encres physiques et de données d'applicateurs physiques, comprenant :
- un accès à des données (1) d'encres physiques comprenant une pluralité de paramètres parmi les suivants : la couleur, la viscosité , la température, la vitesse de séchage, la composition chimique, le taux de transparence;
- un accès à des données (2) d'applicateurs physiques comprenant une pluralité de paramètres parmi les suivants : la largeur, la profondeur, l'épaisseur, le profil, la rugosité, la porosité, la souplesse de l'applicateur, la force d'application, la pression, la température d'application ;
- un accès à des données (4) d'objets cibles comportant des données (401) de maillage initial des objets cibles et des données (402) de relief initial des objets cibles ;
- un accès à des données (5) de règles et fonctions de mélange fournissant une description du processus déterminant la réaction d'un matériau avec une encre appliquée sur ce matériau ;
- un accès à des données physiques (6) de textures T initiales ;
- un microprocesseur (13a) et des instructions de commande (13b) ;
- un module (14) de génération de rendu virtuel avant projection, prévu pour combiner les données d'encres physiques avec les données d'applicateurs physiques de façon indépendante du mode de projection ;
- un module (15) de transformation de rendu virtuel avant projection (RVAP), prévu pour adapter les données de ce rendu à un mode de projection de rendu donné ;
- un module de tessellation (410) des données des objets cibles pour transformer en maillage des données de relief des objets cibles ;
un module intégrateur (16) des paramètres physiques, prévu pour générer un nouvel ensemble de textures T+1 pour le ou lesdits objets prenant en compte les données des objets, les données de l'ensemble de textures T, les données du module de tessellation et les données de rendu virtuel avant projection transformé.

2. Système de génération de textures selon la revendication 1, comprenant un module de rendu de textures à partir des paramètres procéduraux préalablement obtenus.

3. Système de génération de textures selon l'une des revendications précédentes, comportant par ailleurs un module de sauvegarde temporelle (11) prévu pour conserver les données nécessaires pour générer à nouveau un ensemble de textures d'un objet pour lequel un ou plusieurs paramètres sont modifiés ou pour revenir à une étape antérieure d'un processus, à l'état dans lequel l'architecture paramétrique se trouvait à cette étape antérieure.

4. Système de génération de textures selon l'une des revendications précédentes, dans lequel les données (5) de règles et fonctions de mélange comportent des paramètres relatifs aux déformations des objets.

5. Système de génération de textures selon la revendication 4, dans lequel les paramètres relatifs aux déformations des objets sont effectifs sur les données de maillage et/ou de relief.

6. Système de génération de textures selon l'une des revendications 1 à 5, comprenant un module intégrateur (16), prévu pour utiliser des règles et/ou fonctions de combinaison permettant de définir et/ou ajuster les modes d'intégration des différents paramètres physiques entre eux.

7. Système de génération de textures selon la revendication 6, dans lequel le module intégrateur (16) comporte un sous-module (17) de sélection de règles et un sous-module (18) de mise en œuvre de règles permettant d'une part de sélectionner au moins une règle et/ou fonction applicable, et d'autre part de déterminer le mode d'application de la règle afin de générer les données de textures T+1 résultantes.

8. Procédé mise en œuvre par ordinateur de génération de textures procédurales sur un objet à partir de données physiques d'encres (42) et de données d'applicateurs physiques (43), comprenant les étapes dans lesquelles :une ou plusieurs sources de données fournissent un accès à :
- des données (2) d'applicateurs physiques comprenant une pluralité de paramètres parmi les suivants : la largeur, la profondeur, l'épaisseur, le profil, la rugosité, la porosité, la souplesse de l'applicateur, la force d'application, la pression, la température d'application ;
- des données (4) d'objets cibles comprenant des données (401) de maillage initial des objets cibles et des données (402) de relief initial des objets cibles ;
- des données (5) de règles et fonctions de mélange fournissant une description du processus déterminant la réaction d'un matériau avec une encre appliquée sur ce matériau;
- des données physiques (6) de textures T initiales ;
- un module (14) de génération de rendu virtuel avant projection combine les données d'encres physiques avec les données d'applicateurs physiques de façon indépendante du mode de projection;
- un module (15) de transformation de rendu virtuel avant projection reçoit les données de rendu virtuel avant projection préalablement obtenues, et effectue une adaptation de ces données pour un mode de projection de rendu donné ;
- un module de tessellation effectue une transformation d'au moins une partie des données de relief en données de maillages ;
- un module (16) intégrateur des paramètres physiques reçoit les données de l'objet, les données de l'ensemble de textures T, les données de rendu virtuel avant projection transformé, les données de relief et de maillage de l'objet, et les éventuelles données de taux d'application et d'environnement correspondants, et génère un nouvel ensemble de textures T+1 pour le ou lesdits objets, prenant en compte ces données.

9. Procédé de génération de textures selon la revendication 8, dans lequel le module intégrateur reçoit des règles et/ou fonctions d'intégration pour définir et/ou ajuster les modes d'action des différents paramètres physiques entre eux.

10. Procédé de génération de textures selon l'une des revendications 8 ou 9, dans lequel un sous-module (17) de sélection de règles sélectionne au moins une règle et/ou fonction applicable et un sous-module (18) de mise en œuvre de règles pour déterminer le mode d'application de la règle afin de générer les données de textures T+1 résultantes.

11. Procédé de génération de textures selon l'une des revendications 8 à 10, dans lequel un module de sauvegarde temporelle (11) conserve les données nécessaires pour générer à nouveau un ensemble de textures (T+1) d'un objet pour lequel un ou plusieurs paramètres sont modifiés ou pour revenir à une étape antérieure d'un processus à l'état dans lequel l'architecture paramétrique se trouvait à cette étape antérieure.

## Patentansprüche

1. System zur Erzeugung prozeduraler Texturen auf einem Objekt ausgehend von Daten von physikalischen Farben und Daten von physikalischen Applikatoren, umfassend:
- einen Zugriff auf Daten (1) von physikalischen Farben, die eine Vielzahl von Parametern, darunter die folgenden, umfassen: die Farbe, die Viskosität, die Temperatur, die Trocknungsgeschwindigkeit, die chemische Zusammensetzung, den Transparenzgrad;
- einen Zugriff auf Daten (2) von physikalischen Applikatoren, die eine Vielzahl von Parametern, darunter die folgenden, umfassen: die Breite, die Tiefe, die Dicke, das Profil, die Rauigkeit, die Porosität, die Elastizität des Applikators, die Anwendungskraft, den Druck, die Anwendungstemperatur;
- einen Zugriff auf Daten (4) von Ziel Objekten, die Ausgangsmaschenweitendaten (401) der Zielobjekte und Ausgangsreliefdaten (402) der Zielobjekte umfassen;
- einen Zugriff auf Daten (5) von Mischungsregeln und -funktionen, die eine Beschreibung des Prozesses liefern, der die Reaktion eines Materials mit einer auf dieses Material angewandten Farbe bestimmt;
- einen Zugriff auf physikalische Daten (6) von Ausgangstexturen T;
- einen Mikroprozessor (13a) und Befehlsanweisungen (13b);
- ein Modul (14) zur Erzeugung der virtuellen Wiedergabe vor der Projektion, das vorgesehen ist, um die Daten von physikalischen Farben mit Daten von physikalischen Applikatoren auf von dem Projektionsmodus unabhängige Weise zu kombinieren;
- ein Modul (15) zur Umwandlung der virtuellen Wiedergabe vor der Projektion (RVAP), das vorgesehen ist, um die Daten dieser Wiedergabe an einen gegebenen Wiedergabeproj ektionsmodus anzupassen;
- ein Modul (410) zur Tessellation der Daten der Zielobjekte zum Umwandeln von Reliefdaten der Zielobjekte in Maschenweite;
ein Modul (16) zur Integration der physikalischen Parameter, das vorgesehen ist, um eine neue Menge von Texturen T+1 für das oder die Objekte unter Berücksichtigung der Daten der Objekte, der Daten der Menge von Texturen T, der Daten des Tessellationsmoduls und der Daten der umgewandelten virtuellen Wiedergabe vor der Projektion zu erzeugen.

2. System zur Erzeugung von Texturen nach Anspruch 1, das ein Modul zur Wiedergabe von Texturen ausgehend von vorhergehend erhaltenen prozeduralen Parametern umfasst.

3. System zur Erzeugung von Texturen nach einem der vorhergehenden Ansprüche, das ferner ein Modul (11) zur zeitlichen Speicherung umfasst, das vorgesehen ist, um die Daten zu bewahren, die zum erneuten Erzeugen einer Menge von Texturen eines Objekts erforderlich sind, für das ein oder mehrere Parameter abgewandelt werden, oder um zu einem vorherigen Schritt eines Prozesses in dem Zustand zurückzukehren, in dem die parametrische Architektur sich in diesem vorherigen Schritt befand.

4. System zur Erzeugung von Texturen nach einem der vorhergehenden Ansprüche, wobei die Daten (5) von Mischungsregeln und -funktionen Parameter umfassen, die die Verformungen der Objekte betreffen.

5. System zur Erzeugung von Texturen nach Anspruch 4, wobei die Parameter, die die Verformungen der Objekte betreffen, für die Maschenweiten- und/oder Reliefdaten wirksam sind.

6. System zur Erzeugung von Texturen nach einem der Ansprüche 1 bis 5, das ein Integrationsmodul (16) umfasst, das vorgesehen ist, um Kombinationsregeln und/oder -funktionen zu verwenden, die das Definieren und/oder Anpassen der Integrationsmodi der verschiedenen physikalischen Parameter untereinander ermöglichen.

7. System zur Erzeugung von Texturen nach Anspruch 6, wobei das Integrationsmodul (16) ein Untermodul (17) zur Auswahl von Regeln und ein Untermodul (18) zur Umsetzung von Regeln umfasst, die es ermöglichen, einerseits mindestens eine anwendbare Regel und/oder Funktion auszuwählen und andererseits den Anwendungsmodus der Regel zu bestimmen, um resultierende Daten von Texturen T+1 zu erzeugen.

8. Verfahren zur Erzeugung von prozeduralen Texturen auf einem Objekt ausgehend von Daten von physikalischen Farben (42) und Daten von physikalischen Applikatoren (43), das durch Computer umgesetzt wird und die Schritte umfasst, in denen eine oder mehrere Datenquellen Zugriff liefern auf:
- Daten (2) von physikalischen Applikatoren, die eine Vielzahl von Parametern, darunter die folgenden, umfassen: die Breite, die Tiefe, die Dicke, das Profil, die Rauigkeit, die Porosität, die Elastizität des Applikators, die Anwendungskraft, den Druck, die Anwendungstemperatur;
- Daten (4) von Zielobjekten, die Ausgangsmaschenweitendaten (401) der Zielobjekte und Ausgangsreliefdaten (402) der Zielobjekte umfassen;
- Daten (5) von Mischungsregeln und -funktionen, die eine Beschreibung des Prozesses liefern, der die Reaktion eines Materials mit einer auf dieses Material angewendeten Farbe bestimmt;
- physikalische Daten (6) von Ausgangstexturen T;
- ein Modul (14) zur Erzeugung der virtuellen Wiedergabe vor der Projektion kombiniert die Daten von physikalischen Farben mit den Daten von physikalischen Applikatoren auf von dem Projektionsmodus unabhängige Weise;
- ein Modul (15) zur Umwandlung der virtuellen Wiedergabe vor der Projektion empfängt die vorhergehend erhaltenen Daten der virtuellen Wiedergabe vor der Projektion und führt eine Anpassung dieser Daten für einen gegebenen Wiedergabeprojektionsmodus aus;
- ein Tessellationsmodul führt eine Umwandlung von mindestens einem Teil der Reliefdaten in Maschenweitendaten durch;
- ein Modul (16) zur Integration der physikalischen Parameter empfängt die Daten des Objekts, die Daten der Menge von Texturen T, die Daten der umgewandelten virtuellen Wiedergabe vor der Projektion, die Relief- und Maschenweitendaten des Objekts und die gegebenenfalls vorhandenen entsprechenden Anwendungsgrad- und Umgebungsdaten und erzeugt unter Berücksichtigung dieser Daten eine neue Menge von Texturen T+1 für das oder die Objekte.

9. Verfahren zur Erzeugung von Texturen nach Anspruch 8, wobei das Integrationsmodul Integrationsregeln und/oder -funktionen empfängt, um die Wirkungsmodi der verschiedenen physikalischen Parameter zu definieren und/oder untereinander anzupassen.

10. Verfahren zur Erzeugung von Texturen nach einem der Ansprüche 8 oder 9, wobei ein Untermodul (17) zur Auswahl von Regeln mindestens eine anwendbare Regel und/oder Funktion und ein Untermodul (18) zur Umsetzung der Regeln zur Bestimmung des Modus der Anwendung der Regel auswählt, um resultierende Daten von Texturen T+1 zu erzeugen.

11. Verfahren zur Erzeugung von Texturen nach einem der Ansprüche 8 bis 10, wobei ein Modul zur zeitlichen Speicherung (11) die Daten bewahrt, die erforderlich sind, um eine Menge von Texturen (T+1) eines Objekts, für das ein oder mehrere Parameter abgewandelt werden, erneut zu erzeugen oder um zu einem vorherigen Schritt eines Prozesses in dem Zustand zurückzukehren, in dem die parametrische Architektur sich in diesem vorherigen Schritt befand.

## Claims

1. A system for generating procedural textures on an object based on physical ink data and physical applicator data, comprising:
- access to physical ink data (1) comprising a plurality of parameters among the following: color, viscosity, temperature, drying time, chemical composition, and transparency;
- access to physical applicator data (2) comprising a plurality of parameters among the following: width, depth, thickness, profile, roughness, porosity, applicator flexibility, application force, pressure, and application temperature;
- access to target object data (4) including initial mesh data (401) of the target objects and initial relief data (402) of the target objects;
- access to mixing rules and functions data (5) providing a description of the process determining how a material reacts with an ink applied to the material;
- access to physical data (6) of initial textures T;
- a microprocessor (13a) and control instructions (13b);
- a pre-projection virtual rendering generation module (14), provided for combining the physical ink data with the physical applicator data independently of the projection mode;
- a pre-projection virtual rendering (PPVR) transformation module (15), provided for adapting the data of this rendering to a given rendering projection mode;
- a tessellation module (410) for tessellating the target object data in order to transform relief data of the target objects into a mesh;
an integrator module (16) for the physical parameters, provided for generating a new set of textures T+1 for said one or more objects taking into account object data, data from the set of textures T, data from the tessellation module and transformed pre-projection virtual rendering data.

2. The system for generating textures according to Claim 1, comprising a module for rendering textures based on previously obtained procedural parameters.

3. The system for generating textures according to any one of the preceding claims, further including a time-based backup module (11) provided for retaining the data needed to again generate a set of textures of an object for which one or more parameters are modified or to return to a previous step of a process, in the state wherein the parametric architecture was in this previous step.

4. The system for generating textures according to any one of the preceding claims, wherein the mixing rules and functions data (5) include parameters related to the deformations of objects.

5. The system for generating textures according to Claim 4, wherein parameters related to the deformations of objects are effective on the mesh and/or relief data.

6. The system for generating textures according to any one of Claims 1 to 5, comprising an integrator module (16), provided for using combination rules and/or functions which make it possible to define and/or adjust the modes of integration of the various physical parameters relative to one another.

7. The system for generating textures according to Claim 6, wherein the integrator module (16) includes a rule selection sub-module (17) and a rule implementation sub-module (18) which make it possible, on the one hand, to select at least one applicable rule and/or function and, on the other hand, to determine the mode of application of the rule in order to generate the resulting data for textures T+1.

8. A computer-implemented method for generating procedural textures on an object based on physical ink data (42) and physical applicator data (43), comprising the steps in which one or more data sources provide access to:
- physical applicator data (2) comprising a plurality of parameters among the following: width, depth, thickness, profile, roughness, porosity, applicator flexibility, application force, pressure, and application temperature;
- target object data (4), comprising initial mesh data (401) of the target objects and initial relief data (402) of the target objects;
- mixing rules and functions data (5) providing a description of the process determining how a material reacts with an ink applied to the material;
- physical data (6) of initial textures T;
- a pre-projection virtual rendering generation module (14) combines the physical ink data with the physical applicator data independently of the projection mode;
- a pre-projection virtual rendering transformation module (15) receives the previously obtained pre-projection virtual rendering data, and adapts this data to a given rendering projection mode;
- a tessellation module performs a transformation of at least part of the relief data into mesh data;
- an integrator module (16) for the physical parameters receives the object data, data from the set of textures T, transformed pre-projection virtual rendering data, relief and mesh data of the object, and any corresponding application rate and environment data, and generates a new set of textures T+1 for said one or more objects, taking this data into account.

9. The method for generating textures according to Claim 8, wherein the integrator module receives integration rules and/or functions to define and/or adjust the modes of action of the various physical parameters relative to one another.

10. The method for generating textures according to any one of Claims 8 or 9, wherein a rule selection sub-module (17) selects at least one applicable rule and/or function and a rule implementation sub-module (18) to determine the mode of application of the rule in order to generate the resulting data for textures T+1.

11. The method for generating textures according to any one of Claims 8 to 10, wherein a time-based backup module (11) retains the data needed to again generate a set of textures (T+1) of an object for which one or more parameters are modified or to return to a previous step of a process, in the state in which the parametric architecture was in this previous step.
